# EUROPÄISCHE PATENTSCHRIFT

(11) **EP 3 233 556 B1**
(45) Veröffentlichungstag und Bekanntmachung des Hinweises auf die Patenterteilung: **13.05.2020**
(21) Anmeldenummer: 15816447.5
(22) Anmeldetag: 18.12.2015
(51) Int. Cl.: B60K 23/00, F16H 59/02, F16H 61/24, B60K 20/06, B60K 37/06, G06F 3/01, F16H 63/42, B60K 35/00

(54) **BEDIENELEMENT EINES KRAFTFAHRZEUGS**
OPERATING ELEMENT FOR A MOTOR VEHICLE
DISPOSITIF DE COMMANDE D'UN VÉHICULE AUTOMOBILE

(30) Priorität: 19.12.2014 DE 102014019126
(43) Veröffentlichungstag der Anmeldung: 25.10.2017
(73) Patentinhaber: Audi AG, 85045 Ingolstadt (DE)
(72) Erfinder: BARKE, Alexander, 85049 Ingolstadt (DE); NIEMEIER, Christian, 85049 Ingolstadt (DE)
(74) Vertreter: Lehle, Josef
(86) Internationale Anmeldenummer: PCT/EP2015/080397
(87) Internationale Veröffentlichungsnummer: WO 2016/097244

(56) Entgegenhaltungen:
- EP-A1- 2 610 710
- DE-A1- 10 000 338
- DE-A1-102010 032 774
- DE-C1- 4 228 982
- JP-A- 2010 128 788
- US-A1- 2014 283 639
- US-A1- 2014 283 639

## Beschreibung

Die Erfindung betrifft ein Bedienelement eines Kraftfahrzeugs gemäß der im Oberbegriff des Patentanspruches 1 angegebenen Art.

In Kraftfahrzeugen mit Automatikgetriebe ist ein Wahlhebelknauf verbaut oder es sind optional Schaltwippen am Lenkrad angeordnet, die es dem Fahrer ermöglichen, den Gang des Getriebes zu wechseln. Bei am Lenkrad angebrachten Schaltwippen funktioniert dies ohne dass der Fahrer die Hände vom Lenkrad nehmen muss.

Der Wahlhebelknauf und/oder die Schaltwippe geben dem Fahrer keine Rückmeldung über den aktuell gewählten Gang. Um zu sehen, welcher Gang gerade eingelegt ist, muss der Fahrer auf die Instrumententafel schauen und damit den Blick von der Straße abwenden.

Die DE 10 2010 032 774 A1 offenbart einen Fahrerschalter zur Bedienung der Getriebefunktion eines Getriebes in einem Antriebsstrang, der eine gegen eine aktuelle Betätigung gerichtete, federnde Gegenkraft und/oder Rastpositionen ausbildet und damit eine haptische Rückkopplung für den Fahrer ausbildet. Der Fahrschalter zeichnet sich dadurch aus, dass die Schaltanordnung mittels Aktuatoren bei der Betätigung des Fahrschalters zusätzlich spürbare Effekte und/oder ein spürbar verändertes Verhalten gegen die Bedienbewegungen so ausbildet, dass mittels der so zusätzlich gegebenen haptischen Rückkopplung bzw. Rückmeldung eine Informationsvermittlung an den Fahrer möglich ist. Hierdurch soll gewährleistet werden, dass der Fahrer bei einer falschen oder nicht sinnvollen Betätigung z. B. einem plötzlich zusätzlich spürbaren Widerstand oder eine spürbare starke Vibration des Schalters bzw. der Schalterkomponente, also durch eine erweiterte haptische Signalwahrnehmung, spüren und erfährt, so dass sein Vorhaben bei der Systemsteuerung auf keine Zustimmung trifft.

Die DE 10 2010 032 774 A1 offenbart einen Fahrschalter zur Bedienung der Getriebefunktionen eines Getriebes in einem Antriebsstrang, der eine gegen eine aktuelle Betätigung gerichtete, federnde Gegenkraft und/oder Rastpositionen ausbildet und damit eine haptische Rückkopplung für den Fahrer ausbildet. Hierzu ist die Schaltanordnung mittels Aktuatoren bei der Betätigung des Fahrschalters zusätzlich spürbare Effekte und/oder ein spürbar verändertes Verhalten gegen die Bedienbewegungen so ausgebildet, dass mittels der so zusätzlich gegebenen haptischen Rückkopplung bzw. Rückmeldung eine Informationsvermittlung an den Fahrer möglich ist. Insbesondere ist vorgesehen, dass die bei der Betätigung des Fahrschalters mittels Aktuatoren erzeugten Effekte zur Ausbildung einer zusätzlichen haptischen Rückkopplung einzeln oder auch in beliebiger Kombination zur Vermittlung von Informationen an den Fahrer genutzt wird, um damit unerwünschte oder sogar gefährliche Schaltwünsche des Fahrers an den Fahrer zu signalisieren

Weiteren relevanten Stand der Technik zeigt die DE 42 28 982 C1.

Ein gattungsgemäßes, sämtliche Merkmale des Oberbegriffs des Patentanspruches 1 aufweisendes Bedienungselement eines Kraftfahrzeugs ist aus der DE 100 00 338 A1 bekannt.

Der Erfindung liegt die Aufgabe zugrunde ein Bedienelement eines Kraftfahrzeugs derart weiterzubilden, dass über das Bedienelement eine Erfassung des momentan eingelegten Gangs des Getriebes des Kraftfahrzeugs ermöglicht ist.

Diese Aufgabe wird durch die Merkmale des Patentanspruches 1 gelöst.

Die Unteransprüche bilden vorteilhafte Weiterbildungen der Erfindung.

Das Bedienelement eines Kraftfahrzeugs umfasst eine Berührfläche, über die eine Rückmeldung über einen aktuell eingelegten Gang des Getriebes des Kraftfahrzeugs an die Bedienperson erfolgt. Das erfindungsgemäße Bedienelement zeichnet sich dadurch aus, dass die Berührfläche über Aktuatoren ansteuerbare, den Tastsinn einer Bedienperson ansprechende Mittel aufweist, über die die Rückmeldung erfolgt, wobei über die Mittel auch eine Rückmeldung über eine Gangwechselempfehlung an die Bedienperson erfolgt.

Diese Ausgestaltung des Bedienelements hat den Effekt, dass die Information über den aktuell eingelegten Gang bei Berühren der Berührfläche über den Tastsinn übermittelt wird. D.h. der Fahrer des Kraftfahrzeugs "erkennt" den aktuell eingelegten Gang ohne den Blick von der Straße abwenden zu müssen. Hierdurch ist eine erhöhte Fahrsicherheit gewährleistet. Die Gangwechselempfehlung hat den Effekt, dass dem Fahrer ein optimaler Gangwechselzeitpunkt mitgeteilt wird, so dass eine ökologischere und/oder sportlichere Fahrweise ermöglicht ist.

Vorzugsweise sind hierbei die Mittel derart ausgebildet, dass diese von der Bedienperson taktil und/oder haptisch, insbesondere in Form von Vibrationen, Temperatur, Größe, Kontur und/oder Oberflächentextur wahrnehmbar sind.

Eine besonders vorteilhafte Ausführungsform der Erfindung sieht vor, dass die Mittel in Form von der Oberflächenbeschaffenheit der Berührfläche veränderbaren Elementen ausgebildet sind.

Dies kann z.B. in Form von aus der Berührfläche ausbarerer Stifte oder in Form von veränderbaren graphischen Mustern und/oder Buchstaben und/oder Punktrastern realisiert sein.

Vorzugsweise handelt es sich bei dem erfindungsgemäß ausgebildeten Bedienelement um einen Gangwahlschalter, eine Schaltwippe und/oder ein Lenkrad. Die Ausgestaltung des Lenkrads als erfindungsgemäß ausgebildetes Bedienelement erweist sich als besonders vorteilhaft, da die Informationsübermittlung über den aktuell eingelegten Gang auch "bei mit beiden Händen" festgehaltenen Lenkrad erfolgt, was sich wiederum positiv auf die Fahrsicherheit auswirkt.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

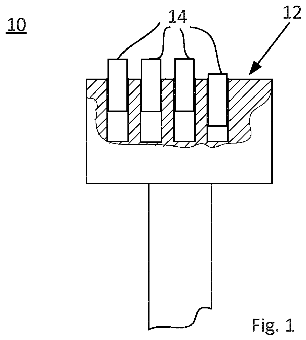

- Fig. 1: ein erfindungsgemäßes ausgebildetes Bedienelement eines Kraftfahrzeugs.

Fig. 1 zeigt ein insgesamt mit der Bezugsziffer 10 bezeichnetes Bedienelement eines Kraftfahrzeugs.

Das Bedienelement 10 ist vorliegend in Form eines Gangwahlschalters ausgebildet. Der Gangwahlschalter 10 weist eine Berührfläche 12 auf.

Wie Fig. 1 weiter zu entnehmen ist, weist der Gangwahlschalter 10 mehrere stiftförmige Elemente 14 auf, die mittels - hier aus Gründen der Übersichtlichkeit nicht dargestellten - Aktuatoren ansteuerbar sind. D.h. über die Akturatoren können die stiftförmige Elemente 14 ein- bzw. ausgefahren werden und sind somit je nach ihrer Position für eine die Berührfläche 12 berührende Bedienperson tastbar bzw. wahrnehmbar.

Gemäß Fig. 1 sind bereits drei Stifte 14 vollständig ausgefahren. Hierdurch erhält der Fahrer die Rückmeldung, dass der dritte Gang eingelegt. Da sich der Fahrer im Beschleunigungsvorgang befindet, fährt ab einer bestimmten Drehzahl ein vierter Stift teilweise aus, um als weitere Information eine haptische Schaltempfehlung an den Fahrer zu geben. Hierdurch ist gewährleistet, dass dem Fahrer zudem ein optimaler Gangwechselzeitpunkt mitgeteilt wird.

## Patentansprüche

1. Bedienelement (10) eines Kraftfahrzeugs, umfassend eine Berührfläche (12), über die eine Rückmeldung über einen aktuell eingelegten Gang des Getriebes des Kraftfahrzeugs an die Bedienperson erfolgt, wobei die Berührfläche (12) über Aktuatoren ansteuerbare, den Tastsinn einer Bedienperson ansprechende Mittel (14) aufweist, über die die Rückmeldung erfolgt, **dadurch gekennzeichnet, dass** über die Mittel (14) auch eine Rückmeldung über eine Gangwechselempfehlung an die Bedienperson erfolgt.

2. Bedienelement (10) nach Anspruch 1, **dadurch gekennzeichnet, dass** die Mittel (14) derart ausgebildet sind, dass diese von der Bedienperson taktil wahrnehmbar sind.

3. Bedienelement (10) nach Anspruch 1 oder 2, **dadurch gekennzeichnet, dass** die Mittel (14) derart ausgebildet sind, dass diese von der Bedienperson haptisch wahrnehmbar sind.

4. Bedienelement (10) nach Anspruch 3, **dadurch gekennzeichnet, dass** die Mittel (14) in Form von die Oberflächenbeschaffenheit der Berührfläche veränderten Elemente ausgebildet sind.

5. Bedienelement (10) nach Anspruch 4, **dadurch gekennzeichnet, dass** die Mittel in Form von aus der Berührfläche ausfahrbaren Stiften (14) ausgebildet sind.

6. Bedienelement (10) nach Anspruch 4, **dadurch gekennzeichnet, dass** die Mittel (14) in Form von veränderbaren graphischen Mustern und/oder Buchstaben und/oder Punktrastern ausgebildet sind.

7. Bedienelement (10) nach einem der vorhergehenden Ansprüchen 1 bis 6, **dadurch gekennzeichnet, dass** es sich bei dem Bedienelement um einen Gangwahlschalter (10) oder eine Schaltwippe oder um ein Lenkrad handelt.

## Claims

1. Operating element (10) of a motor vehicle, comprising a contact surface (12), by means of which feedback can be provided to the operator about a currently engaged gear of the transmission of the motor vehicle, wherein the contact surface (12) has means (14) which can be controlled by actuators and are responsive to the touch of an operator, which means provide the feedback,
**characterised in that**
the means (14) also provide feedback to the operator about a gear change recommendation.

2. Operating element (10) according to claim 1, **characterised in that** the means (14) are designed such that the latter can be perceived in a tactile manner by the operator.

3. Operating element (10) according to claim 1 or 2, **characterised in that** the means (14) are designed such that the latter can be perceived in a haptic manner by the operator.

4. Operating element (10) according to claim 3, **characterised in that** the means (14) are designed in the form of the elements changing the surface texture of the contact surface.

5. Operating element (10) according to claim 4, **characterised in that** the means are designed in the form of pins (14) which can be moved out of the contact surface.

6. Operating element (10) according to claim 4, **characterised in that** the means (14) are designed in the form of changeable graphic patterns and/or letters and/or dot matrices.

7. Operating element (10) according to any of the preceding claims 1 to 6, **characterised in that** the operating element is a gear selection switch (10) or a rocker switch or a steering wheel.

## Revendications

1. Elément de commande (10) d'un véhicule à moteur, comprenant une surface tactile (12), par l'intermédiaire de laquelle un retour à l'opérateur concernant une vitesse actuellement passée de la boîte de vitesses du véhicule à moteur s'effectue, dans lequel la surface tactile (12) présente des moyens (14) pouvant être commandés par l'intermédiaire d'actionneurs, stimulant le toucher d'un utilisateur, par l'intermédiaire desquels le retour s'effectue, **caractérisé en ce qu'**un retour à l'utilisateur concernant une recommandation de changement de vitesse s'effectue également par l'intermédiaire des moyens (14).

2. Elément de commande (10) selon la revendication 1, **caractérisé en ce que** les moyens (14) sont réalisés de telle sorte que ceux-ci peuvent être perçus de façon tactile par l'utilisateur.

3. Elément de commande (10) selon la revendication 1 ou 2, **caractérisé en ce que** les moyens (14) sont réalisés de telle sorte que ceux-ci peuvent être perçus de manière haptique par l'utilisateur.

4. Elément de commande (10) selon la revendication 3, **caractérisé en ce que** les moyens (14) sont réalisés sous forme d'éléments modifiés la nature de surface de la surface tactile.

5. Elément de commande (10) selon la revendication 4, **caractérisé en ce que** les moyens sont réalisés sous forme de tiges (14) pouvant sortir de la surface tactile.

6. Elément de commande (10) selon la revendication 4, **caractérisé en ce que** les moyens (14) sont réalisés sous forme de motifs graphiques variables et/ou lettres et/ou trames à points.

7. Elément de commande (10) selon l'une quelconque des revendications 1 à 6, **caractérisé en ce qu'**il s'agit pour l'élément de commande d'un commutateur de sélection de vitesse (10) ou d'une bascule de commutation ou d'un volant.
